# EUROPEAN PATENT APPLICATION

(11) **EP 2 189 866 A1**
(43) Date of publication of application: **26.05.2010**
(21) Application number: 08020250.0
(22) Date of filing: 20.11.2008
(51) Int. Cl.: G05D 1/00, A61G 5/04, B62K 11/02, A61G 3/04, A61G 5/00

(54) **A tilting sensing and safeguarding mechanism of electric scooter cart**

(71) Applicant: Chen, Yung-Cheng, Jhongli City T'ao yuan County (TW)
(72) Inventor: Chen, Yung-Cheng, Jhongli City T'ao yuan County (TW)
(74) Representative: Volpert, Marcus

(57) **Abstract**

The present invention provides a tilting sensing and safeguarding mechanism of the electric scooter cart, comprising: a central processor, electrically connected with the throttle controller of the electric scooter cart; a gravity sensor, used to sense the tilting state of the electric scooter cart and transmit the sensing signals to the central processor; a light control module, electrically connected with the central processor; the central processor enables the light control module to execute the respective command according to the tilting sensing signal of the gravity sensor; a light display screen, containing the preset lights; the light display screen is controlled by the light control module to determine the ON/OFF state of the lights; a speed control module, electrically connected with the central processor; according to the tilting sensing signal of the gravity sensor, the central processor allows the speed control module to generate a control signal for controlling the motor controller of the electric scooter cart, so as to adjust automatically the operating speed/state of the motor; with this design, it's possible to detect the tilting states of the electric scooter cart and convert into light signals for sending alarming message to the drivers; moreover, when the tilting state of the electric scooter cart exceeds the preset threshold, the motor is decelerated automatically for real-time deceleration with an improved performance and applicability.

## Description

### BACKGROUND OF INVENTION

### 1. Field of the Invention

The present invention relates generally to an electric scooter cart, and more particularly to an innovative one which is designed with a tilting sensing and safeguarding mechanism against tilting.

### 2. Description of Related Art

There is a growing trend that electric scooter carts are commonly used thanks to the advantages of lightweight, ease-of-operation, lower oil consumption and cost, etc.

As the electric scooter carts are mostly used by the aged or handicapped, the safety is a crucial concern in the design. Hence, endless efforts have been made to explore a way of how to prevent technically any possible hazard and ensure optimum operating condition of the electric scooter cart.

However, the safety issues of an electric scooter cart to be considered in the design are reflected in many aspects, such as: brake system, shock absorber and seat's rotation& positioning structure, as well as hazards arising from tilting of the cart body on a rugged road. Though a structural design has been developed to decelerate the motor in tune with the downward slope, the possible tilting conditions are still neglected, leading to hazardous accidents if high-speed running state is maintained in a rough area or at a sharp curve.

Thus, to overcome the aforementioned problems of the prior art, it would be an advancement if the art to provide an improved structure that can significantly improve the efficacy.

Therefore, the inventor has provided the present invention of practicability after deliberate design and evaluation based on years of experience in the production, development and design of related products.

### SUMMARY OF THE INVENTION

Based on the unique structural design of the present invention that the "tilting sensing and safeguarding mechanism of the electric scooter cart" mainly comprises a central processor, gravity sensor, light control module, light display screen and speed control module, the tilting sensing and safeguarding mechanism can detect the tilting states of the electric scooter cart and convert into light signals for sending alarming message to the drivers; moreover, when the tilting state of the electric scooter cart exceeds the preset threshold, the motor is decelerated automatically for real-time deceleration. It's thus clear that, when the electric scooter cart runs on a steep slope or in a tilting state, the present invention enables alarming and automatic deceleration, thus preventing efficiently overturning accident of the electric scooter cart for an improved performance and applicability.

Although the invention has been explained in relation to its preferred embodiment, it is to be understood that many other possible modifications and variations can be made without departing from the spirit and scope of the invention as hereinafter claimed.

### BRIEF DESCRIPTION OF THE DRAWINGS

FIG. 1 shows a block diagram of the tilting sensing and safeguarding mechanism of the present invention.
FIG. 2 shows a perspective view of the present invention that the light display screen is mounted onto the electric scooter cart.

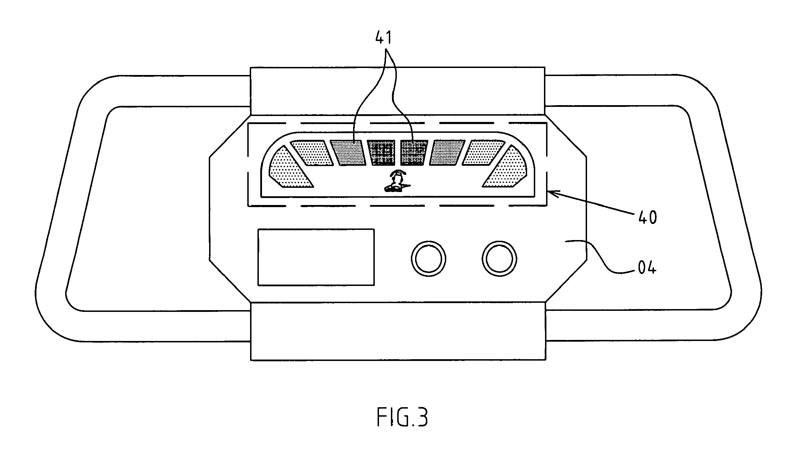

FIG. 3 shows a plane view of the present invention that the light display screen is mounted onto the electric scooter cart.
FIG. 4 shows a comparison view of the present invention between the lights' display state of the light display screen and the tilting state of the electric scooter cart.

### DETAILED DESCRIPTION OF THE INVENTION

The features and the advantages of the present invention will be more readily understood upon a thoughtful deliberation of the following detailed description of a preferred embodiment of the present invention with reference to the accompanying drawings.

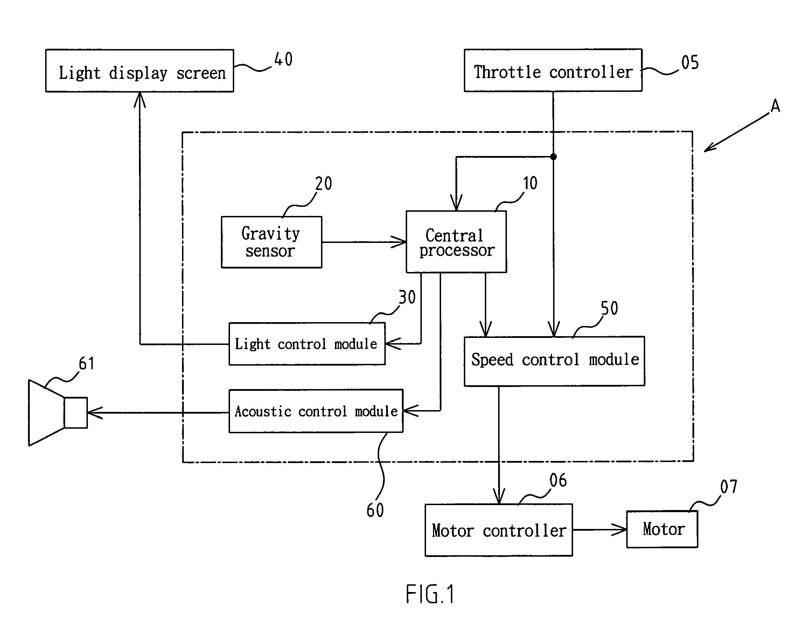

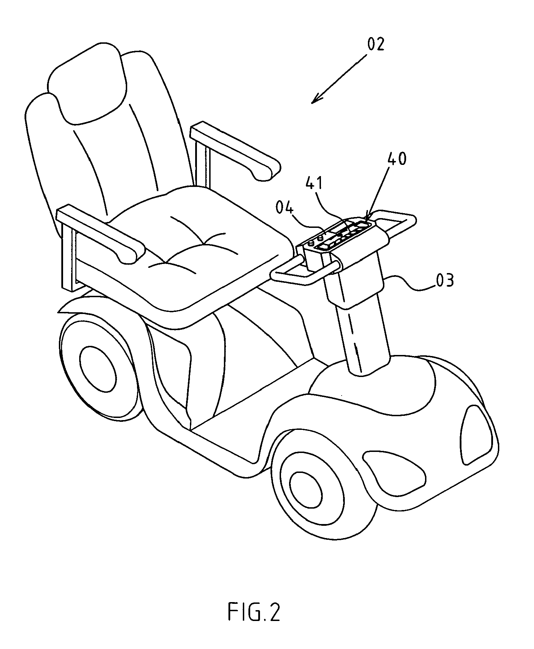

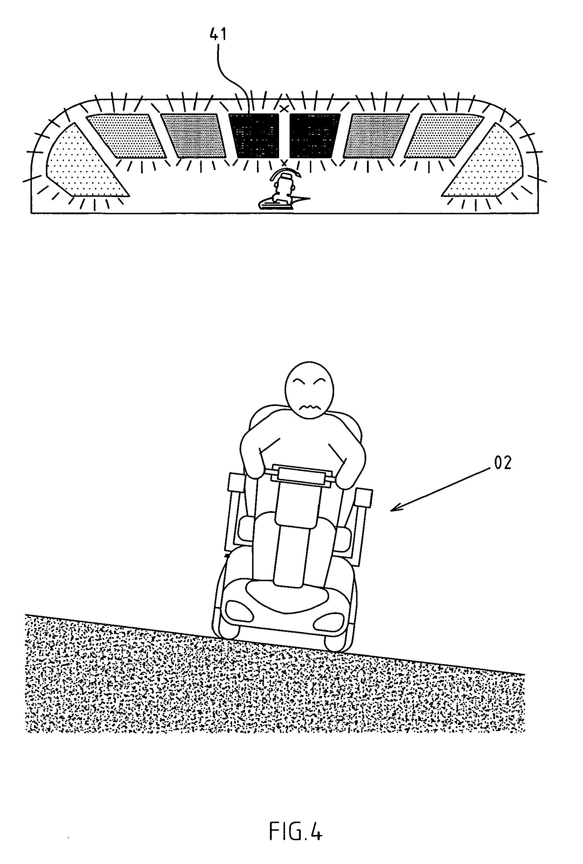

FIG. 1 depicts a preferred embodiment of tilting sensing and safeguarding mechanism of electric scooter cart of the present invention, which, however, is provided for only explanatory objective for patent claims. The tilting sensing and safeguarding mechanism A is used to sense the tilting of the electric scooter cart and generate automatically alarming and deceleration effect. This tilting sensing and safeguarding mechanism A comprising:
a central processor 10, which is electrically connected with the throttle controller 05 of the electric scooter cart 02;
a gravity sensor 20 (G - sensor), which is used to sense the tilting state of the electric scooter cart 02 and transmit the sensing signals to the central processor 10;
a light control module 30, which is electrically connected with the central processor 10; the central processor 10 enables the light control module 30 to execute the respective command according to the tilting sensing signal of the gravity sensor 20;
a light display screen 40, containing the preset lights 41 (shown in FIG. 2); the light display screen 40 is controlled by the light control module 30 to determine the ON/OFF state of the lights 41; the light display screen 40 is arranged on the panel 04 of the head 03 of the electric scooter cart 02 as shown in FIGS. 2∼3; the lights 41 on the light display screen 40 can be arranged at interval from the middle section to both sides, and the colors of the lights 41, i.e. green, yellow, orange and red colors, are displayed to send warning signals depending on the degree of danger; referring to FIG. 4, the flashing states of green, yellow, orange and red lights 41 represent the degree of danger specific to the gradient of the electric scooter cart 02; a speed control module 50, electrically connected with the central processor 10; according to the tilting sensing signal of the gravity sensor 20, the central processor 10 allows the speed control module 50 to generate a control signal for controlling the motor controller 06 of the electric scooter cart 02, so as to adjust automatically the operating speed/state of the motor 07 of the electric scooter cart 02; with this deceleration control mode, the central processor 10 could control a programmable variable resistor module; a bigger resistor signal represents slower speed, otherwise, a smaller resistor signal represents higher speed.

Of which, the tilting sensing and safeguarding mechanism A comprises an acoustic control module 60 and a loudspeaker 61; the acoustic control module 60 is electrically connected with the central processor 10; according to the tilting sensing signal of the gravity sensor 20, the central processor 10 allows the acoustic control module 60 to generate a control signal, and then the loudspeaker 61 to generate preset warning sound (e.g. humming or beeping), music or voice.

Of which, the gravity sensor 20 (G - sensor), available with tilting detection functions of X, Y and Z axles, can detect the output changes by converting 20°∼160° into 10 % ∼ 90% voltage variations; when the gravity sensor 20 is mounted onto the electric scooter cart 02, X-axle is defined with left and right tilting angles, and Y-axle defined with front and rear tilting angles; in the event of occurrence of left and right tilting, X-axle signal will vary relatively, or in the event of occurrence of front and rear tilting, Y-axle signal will also vary relatively; after the gravity sensor 20 is mounted onto the electric scooter cart 02, the central processor 10 (MCU) will define the tilting angle into a horizontal state, and memorize the horizontal signal by pressing and holding RESET button for several seconds. This data can be memorized even if power supply is removed, and the tilting data thereafter can be compared with the horizontal data to acquire the tilting state of the scooter cart; when the scooter cart is running, the central processor 10 can detect the throttle signal via a terminal, thereby judging the forward or backward state of the electric scooter cart 02, and enabling proper light display or acoustic warning and deceleration control depending on the tilting angle.

Based on above-specified structural design, the key design of the present invention is to detect the tilting angle variations from X-axle/Y-axle voltage change of gravity sensor 20 (G - sensor); when the tilting angle grows gradually, warning signals are sent to the driver by the lights 41 or acoustic warning modes, making it possible to brake the scooter cart automatically and prevent the upside-down for the personal safety of drivers.

## Claims

1. A tilting sensing and safeguarding mechanism of electric scooter cart, wherein the tilting sensing and safeguarding mechanism is used to sense the tilting state of the electric scooter cart and generate automatically alarming and deceleration effect; it comprising:
a central processor, which is electrically connected with the throttle controller of the electric scooter cart;
a gravity sensor (G-sensor), used to sense the tilting state of the electric scooter cart and transmit the sensing signals to the central processor;
a light control module, electrically connected with the central processor; the central processor enables the light control module to execute the respective command according to the tilting sensing signal of the gravity sensor;
a light display screen, containing the preset lights; the light display screen is controlled by the light control module to determine the ON/OFF state of the lights;
a speed control module, electrically connected with the central processor; according to the tilting sensing signal of the gravity sensor, the central processor allows the speed control module to generate a control signal for controlling the motor controller of the electric scooter cart, so as to adjust automatically the operating speed/state of the motor of the electric scooter cart.

2. The mechanism defined in Claim 1, wherein the tilting sensing and safeguarding mechanism comprises an acoustic control module and a loudspeaker; the acoustic control module is electrically connected with the central processor; according to the tilting sensing signal of the gravity sensor, the central processor allows the acoustic control module to generate a control signal, and then the loudspeaker to generate preset warning sound (e.g. humming or beeping), music or voice.
